# EUROPÄISCHE PATENTANMELDUNG

(11) **EP 2 617 981 A2**
(43) Veröffentlichungstag der Anmeldung: **24.07.2013**
(21) Anmeldenummer: 13151128.9
(22) Anmeldetag: 14.01.2013
(51) Int. Cl.: F02M 55/02, F17C 1/00, F16L 9/147, F16L 9/18

(54) **Verfahren zur Erhöhung einer Dauerfestigkeit eines Hohlkörpers und dazugehöriger Hohlkörper**

(30) Priorität: 20.01.2012 DE 102012001076
(71) Anmelder: VERITAS AG, 63571 Gelnhausen (DE)
(72) Erfinder: Pascuzzi, Sergio, 63571 Geinhausen (DE)
(74) Vertreter: Klinski, Robert

(57) **Zusammenfassung**

Die Erfindung betrifft ein Verfahren zur Erhöhung einer Dauerfestigkeit eines Hohlkörpers (11) gegenüber Innendruck sowie einen solchen Hohlkörper (11) selbst. Der Hohlkörper (11) weist hierfür eine Kunststoffummantelung auf, die in eine Dichtlage auf eine Umfangsfläche des Hohlkörpers (11) appliziert wird.

## Beschreibung

Die Erfindung betrifft ein Verfahren zur Erhöhung einer Dauerfestigkeit eines Hohlkörpers gegenüber Innendrücken nach dem Oberbegriff des unabhängigen Anspruchs 1. Weiterhin betrifft die Erfindung einen Höhlkörper, insbesondere eine Kraftstoffverteilerleiste nach dem Oberbegriff des unabhängigen Anspruchs 8.

Die Verteilung von Kraftstoff zu einzelnen Zylindern einer Brennkraftmaschine erfolgt üblicherweise durch eine Verteilerleiste, die in der Nähe eines Zylinderkopfes angeordnet ist. Bei herkömmlichen Brennkraftmaschinen werden bei den geforderten niedrigen Drücken von nicht mehr als 10 Bar Wanddicken für die Verteilerleisten von nicht mehr als 1 mm verwendet, wobei vorzugsweise Edelstahl eingesetzt wird. Insbesondere bei direkteinspritzenden Ottomotoren mit Kraftstoffdrücken bis über 150 bar werden zur Zeit aus Gründen der Beständigkeit wegen Temperatur- und Druckbeanspruchung und wegen der durch den Kraftstoff hervorgerufenen chemischen Belastungen (insbesondere beim Einsatz biogener Kraftstoffe) solche dickwandigen Verteilerleisten eingesetzt, die aus dickwandigen, teilweise gelöteten Bauteilen gefertigt werden. Hierdurch ergeben sich sowohl Gewichts- und Kostennachteile als auch Nachteile im Bezug auf Variationsvielfalt, Integration von Anbauteilen oder Zusatzfunktionen.

Im Zuge der Optimierung von Verbrennungsmotoren durch Erhöhung der Einspritzdrücke bei Dieselmotoren bis zu über 2000bar, ist es üblich, eine Bauteilertüchtigung durchzuführen, die eine höhere Belastbarkeit nach sich zieht. Dabei wird vorzugsweise eine Druckeigenspannung in den zu ertüchtigenden Bauteilen appliziert, wodurch sich die Dauerfestigkeit des Bauteils steigern lässt. Dabei wird das Bauteil nach seiner Herstellung einem über dem späteren Betriebsdruck und über der Streckgrenze liegenden Innendruck ausgesetzt, durch den Bereiche einer Innenwand plastifizieren, wodurch Druckeigenspannungen in diesem Bereich induziert werden können. Eine solche nachgeschaltete Behandlung ist zeit- und kostenintensiv.

Aus den vorstehend beschriebenen Nachteilen ergibt sich damit die Aufgabe der vorliegenden Erfindung, eine Verteilerleiste der eingangs genannten Art bereitzustellen und weiter zu entwickeln, deren Dauerfestigkeit auch bei Gewichts- und Kostenvorteilen gegenüber dem Stand der Technik verbessert ist.

Ein Verfahren zur Lösung der vorstehend genannten Aufgabe weist die Merkmale des unabhängigen Anspruchs 1 auf. Danach wird ein Verfahren zur Erhöhung einer Druckeigenspannung eines Hohlkörpers, insbesondere wenigstens eines Metallrohres, vorgeschlagen, bei dem eine Druckspannung auf eine Innenseite des Hohlkörpers induziert wird, wobei ein Druck auf wenigstens einen Teil einer Außenumfangsfläche des Hohlkörpers aufgebracht wird, und wobei der Hohlkörper mit Kunststoff ummantelt wird zur Aufbringung des Drucks auf die Außenumfangsfläche. Durch die Ummantelung des Hohlkörpers mit einem Kunststoff, lassen sich insbesondere Gewichtseinsparungen gegenüber dem Stand der Technik erzielen, da einerseits das Metallrohr dünner als bei einer einschaligen Variante einer Verteilerleiste gewählt werden kann und andererseits der Kunststoff selbst leichter als ein vergleichbares metallisches Material ist. Darüber hinaus können auch mit dem Auftrag eines Kunststoff auf den Hohlkörper und der damit einhergehenden dünneren Ausfertigung des Hohlkörpers Vorteile in der Variationsvielfalt erreicht werden. Mit dem Aufbringen des Drucks auf die Außenumfangsfläche des Hohlkörpers durch den Kunststoff kann auf die im Stand der Technik beschriebene Plastifizierung nach Herstellen des Bauteils verzichtet werden, wobei der Kunststoff selbst den Druck auf die Außenumfangsfläche aufbringt.

Nach einem bevorzugten Ausführungsbeispiel der Erfindung kann der Kunststoff auf den Hohlkörper aufgespritzt und/oder dergleichen aufgebracht werden oder ein Kunststoffrohr oder -leitung auf den Hohlkörper aufgezogen werden. Demnach besteht eine große Variabilität in der Form des Metallrohr umhüllenden Kunststoffs. Die Erfindung sieht hierbei mehrere Formen des Auftrags vor, wobei einerseits der Kunststoff aufgespritzt oder andererseits auch aufextrudiert werden kann, zudem kann der Kunststoff bahnenweise um das Metallrohr gewickelt werden. Daneben sieht das erfindungsgemäße Verfahren auch vor, ein Kunststoffrohr oder eine Kunststoffleitung auf den Hohlkörper aufzuziehen, so dass der Hohlkörper zumindest teilweise vollflächig von dem Kunststoff umgeben ist, vorzugsweise vollflächig.

Gemäß einer bevorzugten Weiterbildung der Erfindung kann die Kunststoffschicht bzw. das Kunststoffrohr oder die -leitung nach dem Aufbringen auf den Hohlkörper erstarren oder aushärten. Es ist bei dem erfindungsgemäßen Verfahren insbesondere vorgesehen, den Kunststoff in einem Aggregatzustand auf den Hohlkörper aufzubringen, der ein Erstarren oder Aushärten nach dem Aufbringen zulässt. In Abhängigkeit des gewählten Kunststoffs - es können Thermoplaste und Dorumere Verwendung finden - erstarrt oder härtet der Kunststoff auf dem Hohlkörper aus. Dabei ist es vorteilhaft vorgesehen, im Falle von Kunststoffrohren oder -leitungen diese ein wenig größer als einen Außenumfang des Metallrohres vorzusehen, so dass die Kunststoffummantelung leicht auf das Metallrohr aufgebracht werden kann.

Nach einer Weiterbildung der Erfindung kann beim Erstarren oder Aushärten der Kunststoffschicht bzw. das Kunststoffrohr oder die -leitung schrumpfen und daraufhin reibschlüssig, zumindest teilweise, oder teilweise Formschlüssig auf der Außenumfangsfläche des Hohlkörpers anliegen. Hierdurch befindet sich die Kunststoffschicht bzw. das Kunststoffrohr oder die -leitung in einem Presssitz auf dem Metallrohr, wodurch es vollflächig auf der Außenumfangsfläche anliegt. Zusätzlich oder alternativ kann auch der eingesetzte Kunststoff beim Aushärten oder Erstarren eine Volumenverkleinerung erfahren.

Gemäß einer besonderen Ausführungsform der Erfindung kann durch die erstarrte oder ausgehärtete Kunststoffschicht bzw. das Kunststoffrohr oder die -leitung ein Druck, insbesondere ein gleichmäßiger Druck, auf die Außenumfangsfläche des Hohlkörpers ausgeübt werden. Durch den in Presssitz auf dem Hohlkörper befindlichen Kunststoff wird ein Druck auf das Metallrohr ausgeübt, durch den eine Druckeigenspannung des Hohlkörpers erhöht wird. Hierdurch lässt sich insbesondere die Dauerfestigkeit bei Innendruckbelastung des Bauteils steigern. Insbesondere wird durch den eng auf der Außenumfangsfläche des Hohlkörpers aufgebrachten Kunststoff eine Druckspannung in der Metallschicht des Metallrohrs induziert, die dem Effekt der Autofrettage bei reinen Metallbauteilen ähnlich ist.

Mit dem erfindungsgemäßen Verfahren können vorteilhafterweise auch wenigstens zwei Hohlkörperteile zu einem Hohlkörper zusammengesetzt werden, die mit einer kontinuierlichen Kunststoffschicht ummantelt werden, wobei eine Kraft zum Zusammenhalten der zwei Hohlkörperteile durch die Kunststoffschicht aufgebracht wird. Üblicherweise werden Verteilerleisten durch mehrere Bauteile gebildet, die an entsprechenden Anlageabschnitten aufeinandergesetzt werden. Im Gegensatz zum Stand der Technik werden mit dem vorliegenden Verfahren die Bauteile durch die Kunststoffschicht zusammengehalten, so dass auf eine separate Lötverbindung der Bauteile verzichtet werden kann. Mit einer zwischen den jeweiligen Bauteilen angeordneten Dichtung kann ein Austreten von Kraftstoff oder anderen Flüssigkeiten aus dem Hohlkörper unterbunden werden, wobei auch insbesondere die hohen Drücke der Dichtigkeit nichts anhaben können. Ferner weist die Kunststoffschicht eine besonders hohe Presspassung auf dem Metallrohr auf, wodurch der auch bei aus mehreren zusammengesetzten Bauteilen bestehende Hohlkörper eine Erhöhung der Druckeigenspannung und damit einer Steigerung der Dauerfestigkeit des Bauteils erfährt.

Weiterhin kann vorteilhaft vorgesehen sein, dass bei der Ummantelung mit dem Kunststoff im Bereich der Außenumfangsfläche zumindest eine Funktionseinheit, insbesondere ein Sensor, Aktor oder dergleichen zumindest teilweise mitummantelt werden können. Hierzu werden vor dem Aufbringen der Kunststoffschicht auf den Hohlkörper ein oder mehrere Funktionseinheiten auf dem Hohlkörper angeordnet, so dass die jeweilige Funktionseinheit vorzugsweise zwischen dem Hohlkörper und der Kunststoffschicht positioniert ist. Eine Funktionseinheit kann entweder zum Messen von beispielsweise einem Kraftstoffdruck oder einer Temperatur eingesetzt werden oder aber auch zur Betätigung eines Druckhalteventils innerhalb der Verteilerleiste. Darüber hinaus sind auch andere Anordnungen der Funktionseinheit im Bereich des Hohlkörpers bzw. der Kunststoffschicht vorstellbar. So kann beispielsweise vorgesehen sein, die Funktionseinheit nicht direkt auf dem Hohlkörper anzuordnen, sondern innerhalb der Kunststoffschicht, so dass die Funktionseinheit in der Kunststoffschicht eingebettet ist.

Weiterhin wird die vorliegende Erfindung durch einen Hohlkörper mit den Merkmalen des unabhängigen Anspruchs 8 gelöst. Danach weist der Hohlkörper, insbesondere eine Kraftstoffverteilerleiste, wenigstens ein längliches Metallinnenrohr und eine das Innenrohr zumindest abschnittsweise umgebene Kunststoffummantelung auf, wobei der Hohlkörper wenigstens eine Öffnung aufweist und wobei durch die Kunststoffummantelung ein Krafteintrag auf das Innenrohr appliziert wird. Die Kunststoffummantelung sitzt dabei im Presssitz auf dem Innenrohr, das durch die nach innen gerichteten Zugkräfte der Kunststoffummantelung auf Druck beansprucht wird. Hierdurch lässt sich die Dauerfestigkeit des Bauteils, insbesondere des Metallinnenrohrs erhöhen.

Nach einer bevorzugten Ausgestaltung der Erfindung kann die Ummantelung ein Kunststoff sein, insbesondere ein Thermoplast oder Duromer, wobei die Ummantelung in der Lage ist, beim Erstarren bzw. Aushärten zu schrumpfen. Grundsätzlich kann die Auswahl des Kunststoffs, der auf dem Innenrohr aufgebracht ist, beliebig sein, wobei allein das Schrumpfverhalten des Kunststoffs entscheidend ist. Thermoplaste weisen solch einen Schrumpfeffekt auf, wenn sie beim Abkühlen erstarren. Ähnlich verhalten sich Duromere, die ebenfalls beim Aushärten schrumpfen und somit bei entsprechender Dimensionierung Druck auf das Innenrohr ausüben, der auch im festen Zustand des Kunststoffs dauerhaft gehalten wird.

Nach einer bevorzugten Weiterbildung der Erfindung kann die Ummantelung einen Druck auf das Innerohr ausüben, durch den eine Druckeigenspannung der Innenseite des Hohlkörpers erhöht wird. Je nach Größe des Schrumpfungsprozesses bei dem gewählten Kunststoff und der Dimensionierung der Kunststoffummantelung, kann der Krafteintrag durch die Kunststoffummantelung derart hoch sein, dass die Innenseite des Innenrohrs eine Erhöhung der Druckeigenspannung erfährt. Hierdurch wird die Dauerfestigkeit des Bauteils erhöht bzw. die Belastbarkeit bei erhöhten Innendrücken gesteigert.

Gemäß einer Weiterbildung der Erfindung kann das Innenrohr zumindest aus zwei Rohrabschnitten gebildet sein, die an korrespondierenden Abschnitten miteinander verbunden sind, wobei die Rohrabschnitte durch die Ummantelung zusammengehalten sind. Aus strukturellen Gründen werden Kraftstoffverteilerleisten vorzugsweise aus mehreren Bauteilen zusammengesetzt, so dass eine Schnittstelle zweier benachbarter Rohrabschnitte zusammengefügt werden müssen. Hierzu wird die Ummantelung derart auf den zwei benachbarten Rohrabschnitten angeordnet, dass diese in einer Art Presssitz zusammengehalten werden. Insbesondere können durch den Schrumpfungsprozess der Kunststoffummantelung eine besonders feste Verbindung zweiter Rohrabschnitte hergestellt werden. Dazu weist das Innerohr aus wenigstens zwei Rohrabschnitten bestehend, eine einheitliche bzw. einstückige Kunststoffummantelung auf.

Besonders bevorzugt kann im Bereich korrespondierende Abschnitte eine Dichtung angeordnet sein, die den Austritt von Kraftstoff oder anderen Flüssigkeiten verhindert. Eine solche Dichtung kann weiterhin auch als zusätzlicher Abstützring für die jeweiligen Rohrabschnitte dienen, wodurch eine verbesserte Passgenauigkeit der bei den aneinanderliegenden Rohrabschnitte erzielt werden kann.

Nach einer bevorzugten Weiterbildung der Erfindung kann die Ummantelung eine Faserverstärkung aufweisen. Fasern, die in der Ummantelung eingebracht sind, stärken die Haltbarkeit der Kunststoffummantelung, insbesondere wenn durch die hohen Drücke innerhalb des Hohlkörpers Druck auf die Ummantelung ausgeübt wird. Die Fasern können hierbei lose oder geordnet oder als eine Art Fasermatte an der Ummantelung angeordnet sein.

Bei einem weiteren Ausführungsbeispiel kann der Hohlkörper zusätzliche Öffnungen aufweisen zum Anschluss von Leitungen oder Ventilen. Dabei ist die Kunststoffummantelung derart auf dem Hohlkörper angeordnet, dass die Öffnungen frei bleiben und evtl. Auskragungen zumindest teilweise mitumschlossen werden.

Gemäß einer besonderen Weiterbildung der Erfindung kann im Bereich der Ummantelung, vorzugsweise teilweise zwischen dem Innenrohr und der Ummantelung, wenigstens eine Funktionseinheit, insbesondere ein Sensor, ein Aktor oder dergleichen, angeordnet sein. Der zweiteilige Aufbau des Hohlkörpers mit einem Innenrohr und einer umgebene Kunststoffummantelung erlaubt vorteilhafterweise die Anordnung von zusätzlichen Einrichtungen zwischen dem Innerohr und der Kunststoffummantelung. Alternativ kann auch eine solche Funktionseinheit innerhalb der Ummantelung angeordnet sein, so dass die Funktionseinheit nicht direkt auf dem Innerohr aufliegt.

Weitere vorteilhafte Ausgestaltungen des Verfahrens und der Vorrichtung begeben sich aus den abhängigen Ansprüchen.

Nachfolgend wird anhand der Figuren ein bevorzugtes Ausführungsbeispiel der Erfindung näher erläutert. Darin anzeigend:
- Figur 1:: eine Kraftstoffverteilerleiste nach einem ersten Ausführungsbeispiel,
- Figur 2:: einen Schnitt durch einen Teilbereich der Kraftstoffverteilerleitung mit einem Metalleinleger und Dichtungsnut.

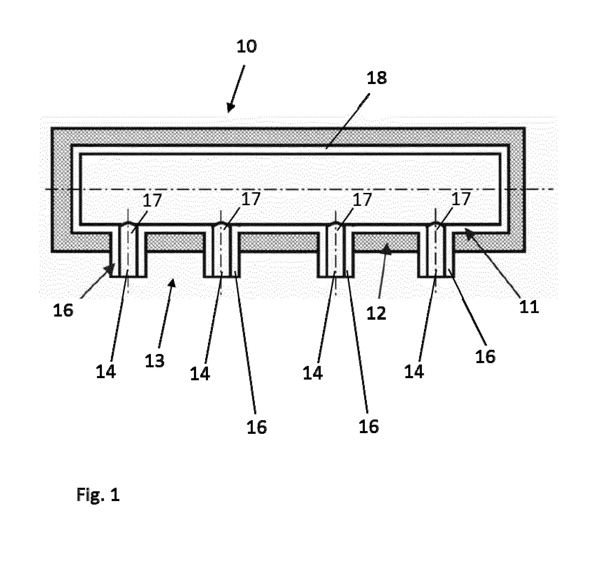

Eine Verteilerleiste 10 der vorliegenden Erfindung ist in Fig. 1 dargestellt, mit einem Innenrohr 11 und einer das Innenrohr 11 umgebenen Ummantelung 12. An einer Längsseite 13 in Längserstreckung der Verteilerleiste 10 sind vier Öffnungen 14 angeordnet, die vorzugweise in eine Richtung zeigen.

Die Öffnungen 14 sind sowohl in dem Innenrohr 11 als auch in der Ummantelung 12 vorgesehen, wobei das Innenrohr 11 im Bereich der Öffnungen 14 Hülsen 16 aufweist, die in Ausnehmungen 17 des Innenrohrs 11 in Eingriff gebracht sind. Auf die spezifische Anschlussart der Hülsen 16 wird nachfolgend noch genauer eingegangen.

Das Innenrohr 11 ist vorzugsweise ein Metallrohr aus einem Edelstahl, das gegen chemische Einflüsse resistent ist. Der Einsatz biogener Kraftstoffe erhöht die Belastung herkömmlich eingesetzter Metallrohre in ungekanntem Maße, wodurch aktuelle Verteilerleisten 10 den neuen Ansprüchen gerecht werden müssen. Zudem müssen die Innenrohre 11 auch temperaturbeständig sein, da neben dem erhöhten Druck innerhalb der Verteilerleiste 10 eine erhöhte Temperatur anliegt. Deshalb hat es sich als zweckmäßig erwiesen, hochlegierte rostfreie Stähle für Verteilerleisten 10 zu verwenden.

Das Innenrohr 11 ist nach dem Ausführungsbeispiel mit einer Ummantelung 12 versehen, die wenigstens zu einem überwiegenden Anteil eine Außenumfangsfläche 18 des Innenrohrs 11 bedeckt. Im Bereich der Öffnungen 14 sind in der Ummantelung 12 Aussparungen vorgesehen. In der Fig. 1 ist der Verteilerleiste 10 schematisch dargestellt, so dass die eckige Darstellungsweise rein exemplarisch zu verstehen ist. Sowohl das Innenrohr 11 als auch die Ummantelung 12 können eine rundlichere Form aufweisen. Vor allem kann die Verteilerleiste 10 jegliche Form aufweisen mit mehr oder weniger Öffnungen 14.

Die Ummantelung 12 besteht vorzugsweise aus einem Kunststoff, der ebenfalls temperatur- und chemikalienbeständig ist. Die Ummantelung ist vorzugsweise ein homogenes Gebilde, das sich gleichmäßig über die Umfangsfläche des Innenrohrs 11 spannt. Die Ummantelung 12 liegt dabei eng auf der Umfangsfläche an, wodurch eine reibschlüssige Verbindung von Innenrohr 11 und Ummantelung 12 hergestellt ist. Durch diesen Presssitz ist die Ummantelung unverrutschbar auf dem Innenrohr 11 angeordnet, wodurch sich eine stabile Einheit aus zwei Komponenten zu einer Verteilerleiste 10 ergeben. Im Gegensatz zu einteiligen Verteilleisten wird die erfindungsgemäße Verteilerleiste 10 auch aus "gebaute" Verteilerleiste bezeichnet.

Der Kunststoff kann von unterschiedlicher Art und Güte sein, sofern er die erwähnte reibschlüssige Anlage der Ummantelung 12 auf dem Innenrohr 11 gewährleistet. Hierfür werden somit vor allem Thermoplaste und Duromere eingesetzt, die den Anforderungen an die Materialeigenschaften genügen. Beide Kunststoffe können mittels einfacher Verfahrensschritte auf das Innenrohr 11 aufgebracht werden, wo die Ummantelung 12 ihren Presssitz auf dem Innenrohr 11 annimmt.

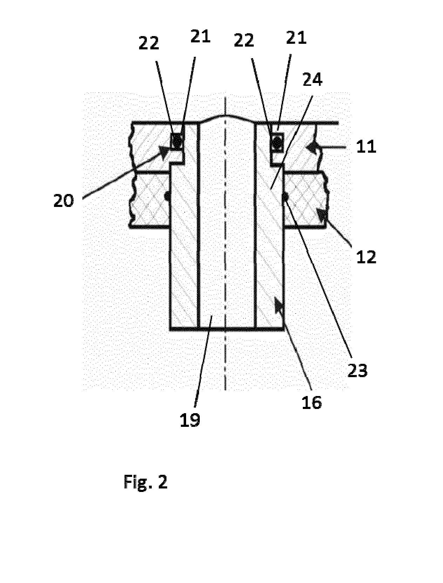

Das Innenrohr 11 weist eine oder mehrere Ausnehmungen 17 auf, in die jeweils, wie in den Fig. 1 und 2 dargestellt ist, eine Hülse 16 angeordnet ist. Die Hülse 16 weist eine zentrale Durchgangsöffnung 19, die eine Verbindung von einer Innenseite des Innenrohrs 11 mit einer Umgebung schafft. Die Hülse 16 im vorliegenden Ausführungsbeispiel ist exemplarisch zu verstehen, da in den Ausnehmungen 17 auch andere Bauteile anordenbar sind, wie beispielsweise Ventile oder auch Messfühler, die eine andere Form als die dargestellte Hülse 16 aufweisen können.

Die Hülse 16 wird in der Ausnehmung 17 des Innenrohrs durch die Kunststoffummantelung 12 gehalten. Dabei übt die durch den Schrumpfungsprozess verkleinerte Ummantelung 12 eine Haltekraft auf die Hülse 16 aus, die einen festen Zusammenhalt der Bauteile gewährleistet. Durch den Presssitz können die Bauteile derart miteinander verbunden werden, dass auf eine separate Dichtung zwischen den Bauteilen verzichtet werden kann. Damit ist die Kraftstoffverteilerleiste 10 gegenüber einem möglichen Austritt von Kraftstoff abgedichtet und es kann auf teure Lötprozesse oder Dichtungen verzichtet werden.

Dennoch ist in anderen Ausführungsbeispielen eine Abdichtung 20 zwischen den beiden Bauteilen im Bereich zweier korrespondierender Anlageabschnitte vorgesehen. Eine solche Dichtung erhöht die Zuverlässigkeit der gewünschten Dichtigkeit und reduziert die Halteanforderungen an die Kunststoffummantelung 12. Im letzteren Fall kann aufgrund der zusätzlichen Dichtung 20 eine Ummantelung 12 mit kleinerem Schrumpfeffekt gewählt werden, was ein Kosten- und/oder Geldvorteil bedeuten kann. Zusätzlich kann die Dichtung 20 auch als eine Art Führung dienen, durch die die beiden Bauteile während des Fertigungsprozesses leichter mit einander verbunden werden.

Die Dichtung 20 selbst kann als gewöhnliche und im Stand der Technik bekannte Ringdichtung vorgesehen sein. In dem Innenrohr 11 ist hierfür eine umlaufende Nut 21 vorgesehen, in der ein Dichtungsring 22 angeordnet ist. Der Dichtungsring 22 steht wiederum in einem reibschlüssigen Kontakt mit der mit dem Innenrohr 11 in Eingriff stehenden Hülse 16. Andere Formen der Abdichtung können aber ebenfalls vorgesehen sein. Zur Erhöhung der Abdichtung kann auch eine Abdichtung 23 im Bereich einer Kontaktfläche zwischen der Hülse 16 und der umliegenden Ummantelung 12 vorgesehen sein. Hierzu kann die Hülse 16 in einem Kontaktbereich 24 eine umlaufende Austragung aufweisen, die von der Ummantelung 12 außenseitig umschlossen ist. Andererseits kann auch ein lösbarer Dichtring in dem Kontaktbereich vorgesehen sein, der von der umschließenden Ummantelung 12 nach dem Schrumpfungsprozess wenigstens zusätzlich gegen die Hülse 16 gedrückt wird. Eine fest installierte Abdichtung 23 im Kontaktbereich 24 gewährt der Ummantelung 12 weiterhin einen Haltepunkt, da durch den Schrumpfungseffekt der Kunststoff die Abdichtung 23 hintergreift und so eine zusätzliche Kraftrichtung erzeugt wird. Hierdurch wird die Hülse 16 durch die Ummantelung 12 besser in Richtung Ausnehmung 17 gedrückt.

Eine weitere Möglichkeit die Hülsen 16 in dem Innenrohr 11 anzuordnen und dort zu halten, ist das Einpressen der Hülsen 16 in die Ausnehmungen 17 oder aber auch das Verlöten der Hülsen 16 an dem Innenrohr 11. Bei diesen Haltemaßnahmen weist die Kunststoffummantelung 12 nur eine stützende Funktion auf.

Wie bereits beschrieben, appliziert der auf der Außenumfangsfläche 18 des Innenrohrs 11 angeordnete Kunststoff einen Krafteintrag auf das Innenrohr. Nach dem Aushärten bzw. Erstarren liegt die Ummantelung 12 in einem Presssitz auf dem Innenrohr 11 auf, da der Kunststoff beim Aushärten bzw. Erstarren geschrumpft ist. Durch die Druckkraft der Ummantelung werden jedoch nicht nur die Hülsen 16 gehalten, sondern die Druckkraft wirkt auch den in der Verteilerleiste 10 erwarteten Drücken von 100 bar und mehr entgegen. Die erfindungsgemäße Verteilerleiste 10 weist ein gegenüber dem Stand der Technik dünneres Metallrohr auf, das für sich den vorgesehen Drücken wenigstens nur eingeschränkt standhalten kann. Die Ummantelung 12 erhöht somit Einsatzfähigkeit der Verteilerleiste 10, da hierdurch sich vor allem eine Dauerfestigkeit der Verteilerleiste 10 erhöht.

Der durch die Ummantelung 12 auf das Innenrohr 11 ausgeübte Druck bewirkt zudem eine Erhöhung einer Druckeigenspannung des Innenrohrs 11. Durch Erhöhung der Druckeigenspannung des Innenrohrs 11 können in der Verteilerleiste 10 höhere Drücke aufgenommen werden. Durch den Schrumpfungsprozess ergeben sich in Umfangsrichtung der Kunststoffummantelung 12 Zugspannungen und Druckspannungen in Umfangsrichtung des Innenrohrs 11, wobei sich im Betrieb der Verteilerleiste 10, bei hohen pulsierenden Drücken, die Druckspannung in dem Innenrohr 11 mit den durch den im Inneren des Rohrs 11 anliegenden Druck erzeugten Zugspannungen überlagern. Dadurch werden die Zugspannung in dem Innenrohr 11 um den Anteil der künstlich erhöhten Druckspannungen in dem Innenrohr 11 verringert, womit eine Verbesserung der Dauerfestigkeit der Verteilerleiste 10 einhergeht.

Zur weiteren Verstärkung des auf des Innenrohr 11 erzeugten Drucks ist in einem alternativen in den Figuren nicht dargestellten Ausführungsbeispiel der Erfindung die Einlage von Fasern in der Ummantelung vorgesehen. Die Fasern können dabei lose oder geordnet in dem Kunststoff angeordnet sein. Insbesondere bei bestimmt ausgerichteten Fasern können gezielt durch das Innenrohr 11 hervorgerufene Zugkräfte in der Ummantelung aufgenommen werden, die durch die Fasern verstärkt ist. Bevorzugt können hierfür auch Fasermatten eingesetzt werden.

Zur Erhöhung der Druckeigenspannung in dem Innenrohr 11 werden unterschiedliche Verfahren vorgeschlagen. Es ist in einem Ausführungsbeispiel der Erfindung vorgesehen, den Kunststoff in Form eines Thermoplasts oder eines Duromers (Duroplasts) auf die Außenumfangsfläche 18 des Innenrohrs 11 aufzusprühen, womit eine im Wesentlichen gleichmäßig Beschichtung des Innenrohrs 11 erreicht wird. Um eine geforderte Dicke der Ummantelung 12, also einer Kunststoffschicht, zu erreichen, kann es notwendig sein, in mehreren Schichten den Kunststoff aufzusprühen. Auf eine homogene Ummantelung ist dabei zu achten.

Der aufgetragene Kunststoff wird in einem zweiten Verfahrensschritt je nach Art des Kunststoffs aushärten oder erstarren, wobei dabei die Ummantelung 12 schrumpft und sich Zugspannungen innerhalb des Kunststoffs bilden.

Bei Duromeren bilden sich während des Aushärteprozesses Kettenmoleküle, die sich auch dreidimensional miteinander vernetzen, wodurch sich die Form des Kunststoffs nach dem Aushärten nicht mehr verändert. Beim Aushärteprozess wird das auszuhärtende Formteil in Form der Ummantelung 12 erhitzt, wobei es zu der gewünschten Schrumpfung kommt. Ebenso schrumpfen auch Thermoplaste, bei denen sich ebenfalls Kettenmoleküle bilden (nicht so stark wie bei Duromeren).

Nach einem weiteren Ausführungsbeispiel wird die Ummantelung 12 in Form eines Schlauchs auf das Innenrohr 11 aufgebracht. Dabei weist das Innenrohr 11 zunächst einen kleinen Durchmesser als der Schlauch auf, so dass bei Komponenten leicht zusammengefügt werden können. Auf dem Innenrohr 11 wird der Schlauch erhitzt, wodurch er einerseits aushärtet und andererseits auch schrumpft, so dass der Schlauch als Ummantelung 12 in einem Presssitz das Innenrohr 11 umgibt.

In der Verteilerleiste 10 können zudem auch Funktionseinheiten vorgesehen sein, die im Bereich der Ummantelung 12 angeordnet sind. Die Funktionseinheiten können Aktoren, Sensoren oder dergleichen sein. Die Aktoren können beispielsweise für die Betätigung von Ventilen in der Verteilerleiste 10 eingesetzt werden, wohingegen die Sensoren beispielweise den in dem Innenrohr 11 anstehenden Druck oder auch die Temperatur messen. Dabei können die Funktionseinheiten entweder zwischen dem Innenrohr 11 und der Ummantelung 12 platziert werden oder aber auch innerhalb der Ummantelung 12 ohne direkten Kontakt zu dem Innenrohr 11. Zwischenlösungen sind ebenfalls möglich, bei den beispielsweise ein Sensor in Kontakt mit der Außenumfangsfläche 18 des Innenrohrs 11 steht, jedoch ein anderer Teil innerhalb der Ummantelung 12 angeordnet ist. Hierdurch kann auf einen nachträglichen Zusammenbau von Verteilerleiste 10 und externen Funktionseinheiten verzichtet werden.

## Patentansprüche

1. Verfahren zur Erhöhung einer Dauerfestigkeit eines Hohlkörpers gegenüber Innendrücken, insbesondere wenigstens eines Metallrohrs (11), wobei eine Druckspannung auf einer Innenseite des Hohlkörpers (11) induziert wird, und ein Druck auf wenigstens einen Teil einer Außenumfangsfläche (18) des Hohlkörpers (11) aufgebracht wird, **dadurch gekennzeichnet, dass** der Hohlkörper (11) mit Kunststoff ummantelt wird zur Aufbringung des Drucks auf die Außenumfangsfläche (18).

2. Verfahren nach Anspruch 1, **dadurch gekennzeichnet, dass** der Kunststoff auf den Hohlkörper (11) aufgespritzt und/oder dergleichen aufgebracht wird oder ein Kunststoffrohr oder -leitung auf den Hohlkörper (11) aufgezogen wird.

3. Verfahren nach Anspruch 1 oder 2, **dadurch gekennzeichnet, dass** die Kunststoffschicht bzw. das Kunststoffrohr oder die -leitung nach dem Aufbringen auf den Hohlkörper (11) erstarrt oder aushärtet.

4. Verfahren nach einem der vorhergehenden Ansprüche, **dadurch gekennzeichnet, dass** beim Erstarren oder Aushärten die Kunststoffschicht bzw. das Kunststoffrohr oder die -leitung schrumpft und daraufhin reibschlüssig zumindest teilweise auf der Außenumfangsfläche (18) des Hohlkörpers (11) anliegt.

5. Verfahren nach einem der vorhergehenden Ansprüche, **dadurch gekennzeichnet, dass** durch die erstarrte oder ausgehärtete Kunststoffschicht bzw. das Kunststoffrohr oder die -leitung ein Druck, insbesondere ein gleichmäßiger Druck, auf die Außenumfangsfläche (18) des Hohlkörpers (11) ausgeübt wird.

6. Verfahren nach einem der vorhergehenden Ansprüche, **dadurch gekennzeichnet, dass** wenigstens zwei Hohlkörperteile zu einem Hohlkörper (11) zusammengesetzt werden, die mit einer kontinuierlichen Kunststoffschicht ummantelt werden, wobei eine Kraft zum Zusammenhalten der zwei Hohlkörperteile durch die Kunststoffschicht aufgebracht wird.

7. Verfahren nach einem der vorhergehenden Ansprüche, **dadurch gekennzeichnet, dass** bei der Ummantelung mit dem Kunststoff im Bereich der Außenumfangsfläche (18) zumindest eine Funktionseinheit, insbesondere ein Sensor, ein Aktor oder dergleichen, zumindest teilweise mit ummantelt wird.

8. Hohlkörper, insbesondere eine Kraftstoffverteilerleiste, der wenigstens ein längliches Metallinnenrohr (18) und eine das Innenrohr (11) zumindest abschnittsweise umgebenen Kunststoffummantelung (12) aufweist, wobei der Hohlkörper (11) wenigstens eine Öffnung (14) aufweist, **gekennzeichnet durch** einen **durch** die Kunststoffummantelung (12) auf das Innenrohr (11) applizierten Krafteintrag.

9. Hohlkörper nach Anspruch 8, **dadurch gekennzeichnet, dass** die Ummantelung (12) ein Kunststoff ist, insbesondere eine Thermoplast, wobei die Ummantelung (12) in der Lage ist, beim Erstarren bzw. Aushärten zu schrumpfen.

10. Hohlkörper nach Anspruch 8 oder 9, **dadurch gekennzeichnet, dass** die Ummantelung (12) einen Druck auf das Innenrohr (11) ausübt, durch den eine Druckeigenspannung der Innenseite des Hohlkörpers (11) erhöht wird.

11. Hohlkörper nach einem der vorhergehenden Ansprüche 8 bis 10, **dadurch gekennzeichnet, dass** das Innenrohr (11) zumindest aus zwei Rohrabschnitten gebildet ist, die an korrespondierenden Abschnitten miteinander verbunden sind, wobei die Rohrabschnitte durch die Ummantelung (12) zusammengehalten sind.

12. Hohlkörper nach einem der vorhergehenden Ansprüche 8 bis 11, **dadurch gekennzeichnet, dass** im Bereich der korrespondierenden Abschnitte eine Dichtung angeordnet.

13. Hohlkörper nach einem der vorhergehenden Ansprüche 8 bis 12, **dadurch gekennzeichnet, dass** die Ummantelung (12) eine Faserverstärkung aufweist.

14. Hohlkörper nach einem der vorhergehenden Ansprüche 8 bis 13, **dadurch gekennzeichnet, dass** der Hohlkörper (11) zusätzliche Öffnungen (17) aufweist zum Anschluss von Leitungen oder Ventilen.

15. Hohlkörper nach einem der vorhergehenden Ansprüche 8 bis 14, **dadurch gekennzeichnet, dass** im Bereich der Ummantelung (12), vorzugsweise zumindest teilweise zwischen dem Innenrohr (11) und der Ummantelung (12), wenigstens eine Funktionseinheit, insbesondere ein Sensor, ein Aktor oder dergleichen, angeordnet ist.
